# FASCICULE DE BREVET EUROPEEN

(11) **EP 3 991 381 B1**
(45) Date de publication et mention de la délivrance du brevet: **06.12.2023**
(21) Numéro de dépôt: 20733288.3
(22) Date de dépôt: 18.06.2020
(51) Int. Cl.: H04L 9/40, H04W 12/02

(54) **PROCÉDÉ ET SYSTÈME DE GÉNÉRATION DE CLÉS DE CHIFFREMENT POUR DONNÉES DE TRANSACTION OU DE CONNEXION**
VERFAHREN UND SYSTEM ZUR ERZEUGUNG VON CHIFFRIERSCHLÜSSELN FÜR TRANSAKTIONS- ODER VERBINDUNGSDATEN
METHOD AND SYSTEM FOR GENERATING ENCRYPTION KEYS FOR TRANSACTION OR CONNECTION DATA

(30) Priorité: 25.06.2019 EP 19305842
(43) Date de publication de la demande: 04.05.2022
(73) Titulaire: Thales Dis France SAS, 92190 Meudon (FR)
(72) Inventeur: NOUAILLE, Maxime, 13881 Gémenos Cedex (FR); KARLISCH, Thierry, 13881 Gémenos Cedex (FR)
(74) Mandataire: Quintero Romero, Manuel
(86) Numéro de dépôt international: PCT/EP2020/067021
(87) Numéro de publication internationale: WO 2020/260136

(56) Documents cités:
- WO-A1-2019/026038

## Description

### Domaine de l'invention.

L'invention concerne procédé et système de génération de clés de chiffrement pour données sensibles de transaction.

En particulier, les clés de chiffrement sont destinées à sécuriser des données sensibles de transaction qui peuvent être présentées de préférence sous forme de codes 2D sécurisés mais pas exclusivement.

Elle concerne une application ou utilisation du procédé et système de génération de clés de chiffrement pour un échange de données sensibles notamment entre un serveur de service et une application de terminal mobile ou entre des terminaux.

L'invention trouve notamment une application ou une utilisation dans la sécurisation des échanges de données sensibles entre des serveurs d'une banque (ou organisme financier) et des applications de terminaux de communication mobile (sous système d'exploitation notamment Android, IOS,...) via notamment des QR codes (Codes de réponse rapide, codes 2D, code barre). Ces échanges peuvent permettre d'effectuer des transactions bancaires digitales (eBanking en anglais) incluant la vente ou paiement de détail ou de gros.

L'invention peut être utilisée pour générer des clés de chiffrement permettant de sécuriser n'importe quelle méthode ou technique de connexion sécurisée (login en anglais) notamment par USB, Bluetooth, NFC ou autre technique de communication... à des serveurs, portail informatique d'accès, ordinateur ou tout appareil de communication distant, etc.

### Art antérieur.

Un QR code (ou code 2D) est couramment utilisé pour diverses transactions digitales bancaires (eBanking) telles que inscription (ou enrôlement), connexion informatique ou accès à un site web, transfert, gestion des bénéficiaires, ouverture de compte, demandes de cartes ou toutes autres opérations nécessitant une validation par un utilisateur.

En particulier, l'invention vise les transactions permises et contrôlées notamment à l'aide de l'appareil « EZIO mobile » de Gemalto SA.

À l'aide d'une application mobile fournie par sa banque, un utilisateur peut valider et terminer une transaction en scannant ou capturant un code QR unique généré à cet effet. Cette méthode est censée faciliter l'expérience utilisateur.

Ce QR code comprend souvent des données sensibles de transaction (par exemple les paramètres d'authentification pour une connexion ou des numéros de compte privé et un montant en devises pour une opération de transfert d'argent, etc.) ; Ces données sensibles pourraient être utilisées par les attaquants ou les fraudeurs pour toute sorte d'attaques en ligne. C'est pourquoi afin de garantir un certain niveau de sécurité, les QR codes sont habituellement chiffrés par des algorithmes cryptographiques standards (3DES, AES...).

Cette mesure de sécurité implique deux choses :
- La clé de chiffrement doit être solidement partagée avec le client (application mobile) afin de pouvoir effectuer le déchiffrement.
- Comme les applications mobiles des banques sont généralement destinées à être publiées sur les boutiques en ligne (Apple, Google,...) afin que quiconque puisse les télécharger, la clé doit être diversifiée afin d'éviter de compromettre tous les utilisateurs si elle a été piratée.

Les inventeurs ont trouvé que la solution la plus simple aurait été de mettre la clé directement dans l'application logicielle mobile et d'appliquer une méthode d'offuscation afin de la protéger, mais comme, l'application serait accessible facilement sur internet et il serait possible de retrouver assez facilement la clé par « reverse ingénierie » ce qui est inacceptable en terme de risque pour la banques.

En outre, dans cette solution, la clé est unique et non diversifiée par utilisateur car elle est directement contenue dans le code de l'application logicielle.

Ils ont aussi pensé que la clé pourrait être partagée via communication sécurisée du type TLS pendant la durée de vie des applications logicielles, mais le niveau de sécurité aurait été insuffisant, l'expérience utilisateur aurait être perturbée par de longs délais d'attente ; En outre, il est nécessaire de faire des transactions en ligne pour échanger la clé avec la banque.

Par ailleurs, on connaît les serveurs d'authentification comprenant des modules HSM (hardware sécurité module en anglais) dont la fonction standardisée est d'effectuer des calculs cryptographiques du type OTP à des fins d'authentification ou validation pour effectuer des connexions électroniques. L'invention peut viser des structures et des fonctions d'HSM et/ou de serveur d'authentification connus de l'homme de l'art, avec les commandes plus ou moins standardisées ou recommandées. Leur structure ou fonctions peuvent conformes à celles des HSM ou serveurs d'authentification de la société Thales tels que « SafeNet Luna Network HSM » ou « Thales Payshield 9000 ».

Ces HSM fonctionnent généralement comme ci-après : Des clés secrètes liées à la génération/vérification d'OTPs sont échangées de façons sécurisées avec les terminaux des utilisateurs finaux puis sont mémorisées en base de données (HSM) du serveur d'authentification, généralement sous forme encryptée par un autre secret généré et connu uniquement par le HSM. Lors de la vérification, par exemple d'un OTP, le serveur d'authentification demande au HSM de décrypter la clé correspondante pour effectuer le calcul inverse de vérification de l'OTP puis renvoie le résultat pour permettre ou non une connexion.

Le document WO 2019/026038 A1 concerne un procédé pour authentifier une transaction. Le procédé met en oeuvre une demande d'authentification d'une transaction incluant les détails de la transaction. Une clé unique partagée entre un fournisseur de service et un téléphone mobile est mis en place au préalable. Les détails de la transaction sont chiffrés avec la clé unique et renvoyés à l'utilisateur notamment sous forme de code 3D. L'utilisateur déchiffre les données de la transaction pour les confirmer la transaction et un OTP est calculé sur la base des données de la transaction. Cet OTP est saisi et renvoyé par l'utilisateur pour faire valider la transaction par le fournisseur de service.

### Problème technique.

De plus en plus de banques s'appuient sur des mécanismes de numéros à usage unique « OTP » (One-Time-Password en anglais) pour sécuriser leurs transactions digitales (ou électroniques) bancaires (eBanking en anglais). Les valeurs OTP sont calculées par l'application logicielle mobile à l'aide d'une clé secrète partagée et vérifiée par la banque (en arrière-plan) grâce à un serveur d'authentification.

Cette clé secrète partagée est souvent échangée en toute sécurité pendant le processus d'enrôlement de l'utilisateur et stockée dans une zone mémoire protégée dédiée à l'application logicielle. Dans cette configuration, la clé secrète partagée est seulement connue de l'application mobile et du serveur d'authentification hébergé dans la banque (en arrière-plan). Et chaque clé secrète partagée d'un utilisateur enrôlé est différente des clés d'autres utilisateurs.

Les inventeurs ont imaginé que ce partage de clé secrète pourrait servir directement pour crypter les données de QR code, mais comme ce n'est pas l'objectif premier d'un serveur d'authentification et que ce n'est pas non plus une caractéristique standard, cela exposerait à des modifications et coûts supplémentaires importants du côté du terminal mobile et du côté serveur pour répondre au problème résolu par l'invention.

Compte tenu du contexte décrit ci-dessus, les inventeurs proposent de mettre en place une solution plus adaptée en utilisant de préférence des ressources déjà disponibles pour faciliter le déploiement de la solution.

### Objectif de l'invention.

L'invention a notamment pour objectif de résoudre les inconvénients susvisés.

L'invention propose un procédé ou système de transaction protégé ou sécurisé par la mise en oeuvre de clés dynamiques chiffrées pour chiffrer et déchiffrer les données de transaction et qui puisse se mettre en place ou se déployer très facilement ou très économiquement avec un très bon niveau de sécurité associé.

L'invention a pour autre objectif de proposer un moyen pour générer une clé dynamique de chiffrement de données de transaction afin de l'utiliser dans le procédé et système ci-dessus de transaction

L'invention a pour autre objectif spécifique et préféré, un procédé de transaction bancaire mettant en oeuvre une étape de validation ou de contrôle des données de la transaction par l'utilisateur via l'usage de QR code chiffrés avec clé dynamique contenant tout ou partie de ces données de transaction;

L'invention a pour autre objectif de permettre des transactions notamment pour des connexions à des services ou entités matérielles ou logicielles par différents protocole de communication USB, Bluetooth...

L'invention a pour objectif une généralisation de l'usage de serveur (d'authentification) pour sécuriser tout échange de données.

### Résumé de l'invention.

L'invention selon un mode préféré consiste à détourner ou utiliser au moins en partie une fonction initiale ou prédéfinie d'un serveur d'authentification pour sécuriser des transactions électroniques au sens large. En particulier, l'invention permet d'utiliser une commande « Get Dpuk » ou équivalente spécifique au serveur d'authentification pour obtenir (sur demande), un élément OTP ou élément de clé dynamique et l'utiliser pour chiffrer des échanges.

En particulier, l'invention agence ou configure, à bon escient, un système ou un procédé de transaction ou d'échange de données sensibles, (mettant en oeuvre de préférence des étapes de transactions notamment bancaires, ou de paiement), en réutilisant ou détournant des commandes standards ou couramment utilisées dans un serveur d'authentification.

L'invention peut prévoir une bibliothèque de commandes ou au moins une commande (ou un jeu de commandes) propres ou spécifiques à des serveurs d'authentification comme « get DPUK », « génère ou intègre un challenge « Aléa » dans une commande de génération d'une clé dynamique « DPUK » destinée au serveur d'authentification ou un HSM similaire à celui d'un serveur d'authentification ; Ces commandes permettre d'interagir avec ce serveur d'authentification et obtenir une clé dynamique standardisée et/ou certifiée, afin de l'utiliser ou de la combiner dans ledit système ou procédé de transaction de données sensibles susvisé.

Le système peut être configuré pour permettre une interaction de communication et/ou des interfaces ad hoc et un accès à ce serveur d'authentification. En particulier, l'invention peut établir une connexion sécurisée ou interface de communication sécurisée entre un ordinateur ou serveur internet d'une entité quelconque (notamment une banque) via tout réseau de communication et/ou de stockage de données et/ou de logiciels via notamment le nuage informatique « cloud (computing) en anglais ».

L'invention permet un accès décentralisé à des ressources de génération de clés dynamiques via un nuage informatique (cloud). Ainsi, le déploiement de l'invention peut être facilité grâce à un « cloud » (privé ou public) pour permettre de collecter facilement et rapidement des clés de chiffrement / déchiffrement (ou de vérification).

L'invention prévoit également en parallèle de charger une application logicielle agencée ou configurée pour utiliser la fonction ou commande similaire ou identique « GEt DPUK » et obtenir une même clé dynamique (que celle générée par le serveur d'authentification) dans un terminal mobile (ou dans un dispositif de sécurité ou de confiance) adapté pour effectuer une assistance à la validation de la transaction ou pour sécuriser une transaction.

A cet effet, tant le serveur d'authentification, (avec de préférence un module de sécurité HSM) que le dispositif ou terminal d'assistance à la réalisation d'une transaction, peuvent contenir ou partager une même clé ou valeur partagée « Kshared ».

Ainsi, l'invention peut prévoit que le système de transaction visé soit adapté ou configuré pour permettre une génération et utilisation d'une clé chiffrée dynamique pour chiffrer et déchiffrer des données sensibles de transaction à différentes fins, telles qu'un contrôle ou validation de transactions, ou une connexion à un système, ou un accès à un service en ligne ou distant, notamment d'une banque ou d'organismes financiers ou autres entités.

A cet effet, l'invention a pour objet un système (de communication) comprenant un serveur informatique ou de communication (notamment d'authentification) comportant des clés sécrètes, associées chacune à un identifiant (ID1) de personne, d'entité informatique ou de terminal ;
Le serveur est caractérisé en ce qu'il est configuré pour générer et communiquer, sur demande avec l'identifiant, et à distance, une clé dynamique à partir d'une clé secrète, et d'une variable et/ou d'un aléa, ladite clé dynamique servant de clé dynamique de chiffrement/déchiffrement ou de base pour obtenir une clé dynamique de chiffrement/déchiffrement de données.

Le caractère dynamique de la clé peut résulter du recours à une variable et/ou un aléa qui peuvent être valables un certain temps prédéterminé ou lié à un évènement.

Selon d'autres caractéristiques :
- Ladite variable (ou ledit aléa) peut être connue du terminal ou de l'entité informatique effectuant la demande. Ladite variable (ou aléa) peut être connue soit parce qu'elle a été générée de manière identique en local, soit par ce qu'elle a été reçue (ou échangée) notamment du serveur d'authentification.
- Le serveur peut être un serveur d'authentification (selon le mode préféré pour faciliter le déploiement de l'invention).

L'invention trouve application dans un système de communication de données entre au moins un terminal et une entité informatique, ledit système comportant un serveur d'authentification ci-dessus (selon l'objet de la revendication 4), une entité informatique de service et des terminaux de communication clients; Le système peut être configuré de préférence pour :
- authentifier chaque terminal ou utilisateur à l'aide du serveur d'authentification sur la base d'une clé partagée entre chaque terminal et ledit serveur d'authentification ; le système peut être caractérisé en ce que ledit système est configuré pour :
   - requérir auprès du serveur d'authentification ou du terminal, une génération de clé dynamique de chiffrement à partir de ladite clé partagée de terminal, et d'un aléa et/ou d'une variable,
   - et utiliser ladite clé dynamique pour chiffrer ou déchiffrer lesdites données échangées entre ledit terminal et ladite entité informatique.

Selon d'autres caractéristiques du système :
- Chaque terminal peut être configuré avec une mémoire comportant une clé de chiffrement/déchiffrement partagée distincte de celle d'un autre terminal et partagée avec ledit serveur d'authentification.
- Ladite clé dynamique peut comprendre ou constituer un OTP, un HOTP ou un TOTP.

L' invention a également pour objet un procédé de communication de données entre au moins un terminal et une entité informatique, ledit procédé mettant en oeuvre un système comprenant ledit serveur d'authentification (selon la revendication 4), une entité informatique de service et des terminaux ; Le procédé peut comprendre des étapes pour :
- configurer ledit système pour authentifier chaque terminal ou utilisateur à l'aide du serveur d'authentification sur la base d'une clé partagée (Kshared) entre chaque terminal et ledit serveur d'authentification ;
- requérir auprès du serveur d'authentification ou du terminal, une génération de clé dynamique de chiffrement à partir de ladite clé partagée correspondant au terminal, et d'un aléa et/ou variable,
- utiliser ladite clé dynamique pour chiffrer ou déchiffrer un échange de données entre ledit terminal et ladite entité informatique.

Selon d'autres caractéristiques, du procédé :
- Ledit échange de données entre ledit terminal et ladite entité informatique est distinct d'un échange de données d'authentification comprenant un numéro à usage unique échangé entre ledit terminal et ledit serveur d'authentification ou ladite entité de communication ;
- Ladite clé de chiffrement dynamique peut être générée par ledit serveur d'authentification, en réponse à une commande spécifique (standard ou certifiée émise par ladite entité informatique de communication.

### L'invention possède les avantages ci-après.

Comme la clé dynamique ou un secret similaire est toujours nécessaire, cette solution pourrait être facilement mise en place avec n'importe quel serveur d'authentification sur le marché et avec n'importe quel terminal mobile (smart phone, tablette, PDA, ou autre...), ayant un kit de développement logiciel (SDK) présentant des fonctions de génération d'OTP standards, deux ressources matérielles ou logicielles que les banques ou autres entités (société morales utilisatrices, ou organismes publics ou privés) disposent déjà.

L'invention peut requérir un développement logiciel minime sur des terminaux mobiles (ou dispositifs électroniques de confiance ou de sécurité tel que EZIO EYE de la société Gemalto SA) et dans des ordinateurs supports ou des serveurs en arrière-plan (back-end) de la banque ou autres entités privés ou publique.

La clé utilisée pour déchiffrer le QR code (code 2D) peut ne pas être stockée n'importe où dans l'application mobile ; au contraire elle est changée (dynamiquement) à chaque transaction pour renforcer la sécurité.

La banque n'a pas besoin d'engager des coûts supplémentaires en infrastructure matérielles et/ou logicielles pour mettre en place un processus compliqué de stockage et gestion de ces clés dynamiques ;
Le processus de déchiffrement (vérification) peut être hors ligne ; Il peut être effectué même si l'application logicielle mobile n'est pas connectée au réseau, ce qui représente un avantage très important pour l'utilisateur.

L'invention peut être étendue à tout dispositif matériel de génération d'OTP distinct ou non d'un serveur d'authentification.

### Brève description des figures.

- La figure 1 illustre une première partie du procédé et système pour sécuriser une transaction électronique entre un serveur de transaction et un terminal client ;
- La figure 2 illustre une seconde partie du procédé et système pour sécuriser une transaction électronique entre un serveur de transaction et un terminal client ;
- La figure 3 illustre un procédé d'utilisation d'une clé dynamique d'un serveur (d'authentification ou de clés DPUK, OTP) à des fins de chiffrement / déchiffrement entre un serveur de transaction et un terminal client ou entre des terminaux ;

### Description.

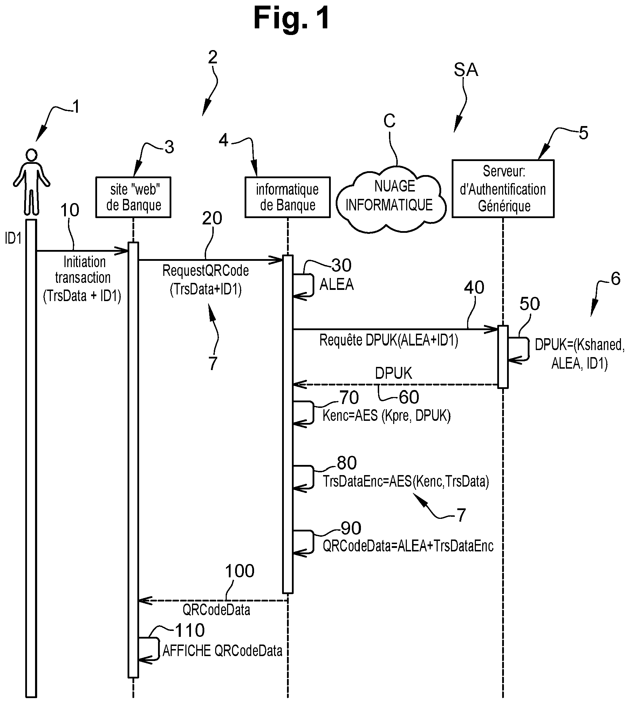

A la figure 1 illustre une première partie d'un procédé (et système 2) pour un procédé de communication de données entre au moins un terminal et une entité informatique. Ce procédé est destiné à sécuriser un échange 10 de données sensibles (données sensibles de transaction électronique et/ou de connexion), entre un serveur de transaction 3 et un terminal client 1.

Par transaction on entend un échange de données entre deux entités logiques ou matérielles. Elle peut être à différentes fins, notamment à des fins de connexion à un service ou d'accès logique ou physique, ou de transaction financières, paiement, enrôlement, enregistrement, transfert financiers, échanges de données sensibles...

Le procédé peut mettre en oeuvre ou utiliser avantageusement un système déjà existant comprenant un serveur d'authentification, une entité informatique de service (serveur de transaction 3) et des terminaux client 1 ; Ce système peut être déjà configuré pour authentifier chaque terminal ou utilisateur à l'aide du serveur d'authentification sur la base d'une clé partagée entre chaque terminal et ledit serveur d'authentification.

Ainsi, le déploiement de l'invention en est facilité si le système prévoit déjà ces fonctions et matériels ci-dessus.

La transaction 10 comprend une étape de chiffrement des données sensibles avec une clé de chiffrement,
Selon une caractéristique du mode préféré de l'invention, le procédé comprend les étapes de configuration d'au moins un terminal client et d'un serveur d'authentification pour générer une clé dynamique d'authentification sur la base une clé partagée, d'un aléa et (éventuellement) un identifiant correspondant à chaque terminal;
Le serveur requiert un identifiant du terminal ou de l'utilisateur ou d'une application pour retrouver la même clé ou secret partagé dans une base afin de retrouver la même clé dynamique.

Le terminal émetteur n'a pas nécessairement besoin de l'identifiant de lui-même ou d'une application qu'il héberge ou de l'utilisateur pour générer la même clé. Par contre, le terminal communique un identifiant vers le serveur de clés pour retrouver le même secret partagé.

Ainsi, le procédé peut mettre en oeuvre des étapes pour requérir auprès du serveur d'authentification, une génération de clé dynamique de chiffrement à partir des éléments ci-dessus.

Quant au terminal, le procédé peut requérir la même chose mais peut être sans identifiant car contrairement au serveur, le terminal peut n'avoir qu'une clé partagée alors que le serveur peut comprendre de nombreuses clés partagées correspondant à chaque terminal ou utilisateur du système.

Le serveur peut retrouver la clé partagé correspondant sur la base d'un identifiant d'utilisateur et/ou du terminal (ex. IMEI de téléphone portable)
Dans l'exemple, le serveur d'authentification 5 peut être lié à ou comprendre un HSM (Hardware Security Module en anglais) qui stocke en mémoire sécurisée des clés de chiffrement (kshared) pouvant être associées à des utilisateurs ou terminaux d'utilisateur (ou des entités informatiques communicantes ou ordinateurs distants) et partagées avec des applications clientes 1 à des fins d'authentification ; Un serveur d'authentification comporte généralement tout moyen matériel et logiciel nécessaire à la sécurité des informations qu'il contient.

Toutefois, le serveur d'authentification 5 peut être tout ordinateur distant équivalent doté de fonctions de communication et de mémorisation sécurisées rigoureuses, de haut niveau de clés de chiffrement dédiées à de l'authentification. La mémorisation peut s'effectuer notamment dans des éléments de sécurité SE, clés USB associées, ou autres supports matériels connectés ou soudés sur un circuit imprimé de serveur tant que le niveau de sécurité est garantie.

Le serveur d'authentification peut comporter de préférence des interfaces de communication en réseau (internet, intranet) pour être notamment accessible dans le nuage (cloud en anglais) via tout réseau de télécommunication, Wifi, Bluetooth, NFC, télécommunication mobile. De préférence, des procédures d'authentification mutuelle ou de communication sécurisée peuvent être mise en oeuvre telles HTTPS.

Le serveur d'authentification peut être dédié aux transactions à réaliser par le procédé ou système. Toutefois, avantageusement, il n'est pas dédié mais fait partie d'un système d'authentification préétabli distinct.

En particulier, le système d'authentification peut être conçu à des fins totalement autres (distinctes) que celles pour lesquelles il est utilisé dans l'invention. Il est plutôt exclusivement utilisé pour autoriser des connexions suite à authentification d'un utilisateur désireux d'accéder à un service ou une opération en ligne via un appareil de communication de l'utilisateur émettant un code préférentiellement de type OTP (numéro à usage unique) . Il peut ne pas être prévu ou dédié à un service de transaction quelconque.

Le serveur d'authentification peut donc être distinct ou étranger à un service de transaction bancaire, de transactions financières électroniques, d'e-Commerce visé préférentiellement par le domaine d'application d l'invention.

Selon une caractéristique, la transaction 10 est distincte d'une opération d'authentification notamment à l'aide d'un numéro à usage unique (OTP) . Un tel OTP permet d'effectuer une comparaison avec un OTP émis ou généré en parallèle dans le serveur d'authentification pour authentification.

Le système d'authentification peut exclusivement permettre notamment de fournir un service réseau pour valider des informations tel que le nom et mot de passe d'un utilisateur, pour accorder une connexion, pour vérifier des certificats pour authentification de personnes, pour vérifier des mots de passe à usage unique (OTP) générés à distance par un dispositif d'un utilisateur, ou pour envoyer un OTP à un utilisateur que ce dernier doit renvoyer au serveur d'authentification par un canal parallèle à celui de la réception afin de permettre un connexion à un serveur distant, ou accès quelconque.

Par ailleurs, dans l'exemple, les applications logicielles de type clients 1 peuvent comprendre des applications mobiles hébergées dans des terminaux mobiles, ou application client d'ordinateur personnel, tablettes, assistants personnel etc.

Selon une caractéristique du mode préféré, le procédé prévoit une requête d'une clé dynamique d'authentification auprès du serveur d'authentification 5 et/ou du terminal d'utilisateur 1 ;
En effet, aussi bien le serveur que le terminal sont en mesure d'initier un chiffrement de données sensibles et de communiquer à l'autre le résultat chiffré avec notamment un aléa pour chiffrement dynamique et un identifiant pour retrouver la clé partagée.

Selon une autre caractéristique du mode préféré, le procédé prévoit une utilisation de la clé dynamique DPUK pour le chiffrement ou de déchiffrement de données sensibles échangées entre ledit terminal et ladite entité informatique
En effet, cette clé dynamique ne va pas servir ici pour s'authentifier notamment comme via un OTP, mais pour chiffrer l'ensemble des données sensibles à échanger.

Le serveur d'authentification 5 comprend des mémoires (ou une base de stockage sécurisée de données) pour stocker / mémoriser des clés de chiffrement 6, DPUK ou kshared. Ces clés 6, DPUK, kshared sont partagées / communes avec des applications logicielle 16 de type client dédiées à des fins d'authentification dans des terminaux clients d'un utilisateur ;
Selon une autre caractéristique du mode préféré, le système de transaction 2 de l'invention est également configuré pour chiffrer lesdites données sensibles 7 avec ladite clé de chiffrement dynamique (Dpuk).

En fait, selon l'invention, le serveur d'authentification n'effectue pas cette opération de chiffrement. Il se contente de fournir la clé « Dpuk », de manière connue en soi grâce à une commande normale prévue en soi dans l'état de l'art exclusivement à des fins distinctes d'une transaction électronique).

Toutefois, cette clé « Dpuk » est utilisée grâce à l'invention, à des fins de transaction électroniques (notamment bancaires) par un serveur 4, 3 du système de transaction 2.

En l'occurrence, le serveur de transaction peut être unique, multiple ou ici double puisqu'il comprend le serveur 3 (ou un site en ligne sur internet) d'un fournisseur de service, par exemple bancaire, ou d'organisme financier.

Ces derniers (site internet ou ordinateurs) sont associés ou reliés par tout moyen de communication, à un serveur 4 (ou à des ordinateurs centraux) d'arrière-plan (back end en anglais) d'un fournisseur de services, par exemple ici, un fournisseur de service financiers d'une banque ou d'un organisme financier.

En fonctionnement, le serveur d'authentification 5 d'un système d'authentification SA, reçoit une commande 140 de clé dynamique d'un serveur de transaction 4 d'un système de transaction 2 ; Et en réponse, le serveur d'authentification 5 procède, à la génération à d'une clé de chiffrement dynamique (Dpuk) ;
Le système d'authentification comprend un serveur d'authentification / client et utilise des clés de chiffrement partagées ou diversifiées avec des applications clientes dédiées à des fins d'authentification ;
Le système de transaction 2 est du type serveur / client et utilise les mêmes clés de chiffrement 6, DPUK, « Kshared » partagées avec (ou diversifiées) des clés d'applications clientes dédiées à des fins de transaction,

Selon une caractéristique du mode préféré, la clé de chiffrement dynamique (DPUK) est générée par le serveur d'authentification 5 en réponse à une commande ou requête spécifique 40 de type standard ou certifiée, émise par le serveur de transaction 3 ou un serveur ou ordinateur 4 associé ou relié au serveur de transaction 3 ou site internet d'un fournisseur de service.

A la figure 1, on va décrire ci-après les différentes interactions ou étapes d'un exemple du procédé et système pour sécuriser une transaction électronique entre un serveur de transaction et un terminal client.
- A l'étape 10 un utilisateur 1 se connecte à un site bancaire 3 de sa banque via un ordinateur fixe ou portable ou même une tablette (non illustré) et il initie une transaction de transfert de fond tel qu'un virement de son compte à un compte tiers externe ; Il remplit en ligne un formulaire de virement avec des données de transaction (TrsData), un identifiant d'utilisateur ID1 et poursuit la transaction en cliquant sur un bouton ;
- A l'étape 20, le site bancaire 3 émet une requête de QR code ou code 2D auprès des ordinateurs 4 de la banque (back office, back end) pour sécuriser et confirmer l'ensemble des données (TrsData) de la transaction (montant, compte débiteur, compte créditeur, bénéficiaire, date du virement...), ces données de transaction sont associés à l'identifiant utilisateur ou identifiant lié à un appareil ou terminal de l'utilisateur ou à un compte utilisateur ou une application logicielle de terminal mobile; L'identifiant est lié à la clé partagée (Kshared) entre le terminal et le serveur 5;
- Aux étapes 30 puis 40, les ordinateurs 4 de banque génèrent un aléa ou challenge (Chall) puis émettent une requête de clé dynamique DPUK véhiculant l'aléa (chall) et l'identifiant ID1; A cet effet, une connexion de préférence sécurisée est établie avec un serveur d'authentification 5. De préférence, la connexion s'effectue à travers le nuage informatique (C).

L'aléa (et/ou variable) est transmis avec un identifiant ID1 (par exemple un identifiant du terminal tel que IMEI ou d'une application hébergée par le terminal ou un identifiant de l'utilisateur) et/ou autre identifiant lié à la clé partagée (Kshared) du terminal utilisateur. Alternativement, cet identifiant ID1 peut faire partie de l'aléa qui pourrait comprendre l'identifiant proprement dit comme partie fixe et une partie variable complétant l'identifiant pour former globalement l'aléa (par exemple, un radical fixe forme l'identifiant et un aléa variable complète l'identifiant en suffixe).

Le serveur d'authentification 5 peut être indépendant du système de transaction de la banque mais peut demeurer accessible, sur demande, selon une procédure de préférence bien cadrée ou sécurisée, à tout système de communication externe notamment un système du type client - serveur. Une connexion HTTPS peut être mise en place ou autre connexion via VPN par exemple.

A cet effet, les ordinateurs ou serveur 4 de la banque peuvent être configurés (avec notamment adresse IP du serveur d'authentification, ou autre procédure de connexion) pour établir une connexion 40 et échanges 60 avec le serveur 5 selon une procédure de connexion prédéfinie en réponse à la requête 20 du site bancaire 3.
- A l'étape 50, en réponse à la requête de DPUK 40, le serveur d'authentification identifie la clé partagée correspondant au terminal de l'utilisateur sur la base d'un identifiant accompagnant l'aléa, génère une clé dynamique DPUK avec une clé partagée (Kshared) sur la base de l'aléa comme paramètre ; L'élément DPUK peut être calculé sur la base d'un OTP standard (HOTP dans l'invention - basé sur l'incrémentation de compteurs) retourné par le serveur d'authentification. D'autres versions d'OTP peuvent être envisagées comme : TOTP ou aléa/réponse (challenge/réponse) connues de l'homme de l'art.

Le serveur d'authentification peut être configuré/ paramétré pour permettre une connexion avec une liste de serveurs ou ordinateurs préalablement identifiés et autorisés à requérir une clé dynamique selon un processus préétabli cadré et sécurisé. Le serveur comporte donc une liste d'identifiants et données de connexion de serveurs ou d'ordinateur (tels que les adresses MAC, adresse IP, nom de domaine, mot de passe associé).

Une procédure d'authentification réciproque entre les entités 5 et (3 ou 4) peut être suivie pour permettre un accès au serveur d'authentification 5, (par exemple : JWT (Json web token en anglais) ou dans l'invention un JSESSIONID).
- A l'étape 60, la clé dynamique 6 (ou élément) DPUK est transmise en retour par le serveur 5 à l'entité requérante 4, ici la banque, via le canal de communication sécurisé via ici notamment le nuage informatique (C) ;
- A l'étape 70, l'entité 4 a reçu DPUK et en réponse calcule une clé de chiffrement (Kenc) sur la base de DPUK et d'une clé de formatage (Kpre) ; Cette clé (Kpre) permet de changer de format de données ou de nombre de bits (de 8 en 16 bits par exemple) et est connue à la fois par l'entité serveur et appareil de l'utilisateur (i.e. application mobile). Cette clé n'a pas forcément à être sécurisée. L'étape de formatage avec la clé de formatage n'est pas indispensable au principe de l'invention.
   Ici on effectue un calcul de chiffrement avec un algorithme de chiffrement symétrique de type AES mais d'autres algorithmes peuvent bien entendu être envisagés (DES, 3DES, ...)
- A l'étape 80 du procédé ou du programme dans l'entité matérielle et logicielle 4, il est prévu d'effectuer à la suite un chiffrement type AES (ou là encore DES ou 3DES) des données de la transaction (TrsData) à l'aide de la clé (Kenc) obtenue précédemment pour obtenir un chiffrement des données de la transaction (TrsDataEnc) avec une clé dynamique;
- A l'étape 90, les données de transaction chiffrées dynamiquement obtenues ci-dessus (TrsDataEnc) peuvent être de préférence (sans être une obligation) transformées en un format de code 2D (ou QR code) en y incluant aussi l'aléa (chall) dans la transformation pour obtenir QRCodeData = Chall + TrsDataEnc ; Alternativement, les valeurs ou données (TrsDataEnc) et l'aléa peuvent être transmis sous tout autre format connu de l'homme de l'art notamment digital, binaire, alphanumérique, signal analogique, image.
- A l'étape 100, l'entité 4 de la banque peut enfin renvoyer une information comprenant les données de la transaction chiffrées dynamiquement et sous forme optionnelle de QR code ou code 2D (QRCode Data). Cette information constitue la réponse à la requête initiale 20 du site internet de la banque 3 (ou autre fournisseur de service ou système informatique ou ordinateur nécessitant un élément dynamique DPUK aussi sécurisé qu'un OTP) et est destinée à sécuriser la demande de transaction 10 de l'utilisateur 1.
- A l'étape 110, le site internet 3 de la banque affiche sur une page web l'information de la transaction comprenant les données de la transaction notamment pour vérification ou contrôle par l'utilisateur (QRCode Data) ; Cette information peut être présentée sous forme de QR code (ou autre forme possible) .

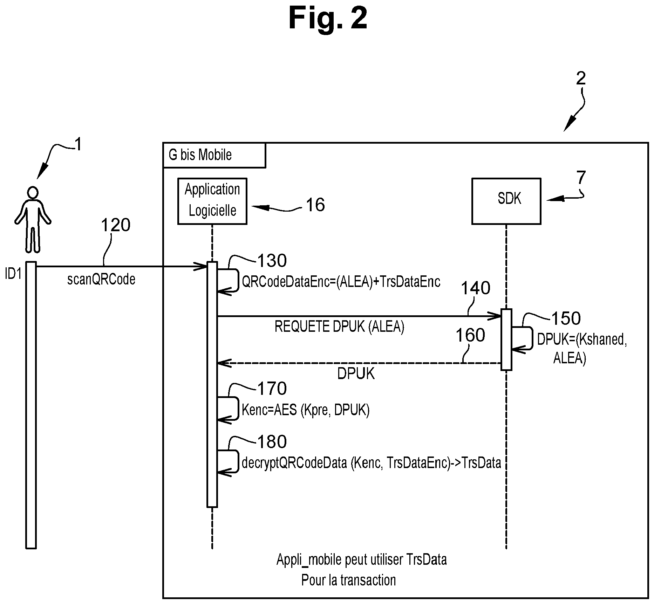

A la figure 2, on décrit ci-après la seconde partie du procédé et système pour sécuriser une transaction électronique.
- A l'étape 120, l'utilisateur effectue un scan ou photographie à l'aide de son smartphone (dans l'exemple) du code affiché sur son dispositif PC ou tablette avec lequel il s'était connecté au site internet de la banque pour effectuer la transaction.

Pour cela, il peut disposer d'un appareil (ou dispositif) portable sécurisé mobile, tel que celui proposé par le demandeur « Gemalto CAP », ou un téléphone mobile intelligent équipé d'un logiciel spécifique « Gemalto Mobile protector ». Il peut aussi disposer d'un dispositif autre tel que « Gemalto token » pour déchiffrer les données de la transaction qui pourraient être affichées sous forme alphanumérique et saisis par l'utilisateur manuellement.

Dans l'exemple, l'utilisateur utilise un dispositif 6 bis (téléphone mobile) avec une application mobile (ou logicielle) 16 (Gemalto mobile Protector) ;
- A l'étape 130, le dispositif ci-dessus traiter la photographie ou scan du QR code affiché sur l'écran de son appareil de communication (ordinateur personnel) connecté à la banque pour le lire et extraire les données (formatées sous cette forme) comprenant les données de la transaction et l'aléa (TrsDataEnc + Chall) ;
Le dispositif 6 bis (exemple le téléphone portable) comporte également un kit de développement logiciel sécurisé (SDK) tel que « Gemalto mobile Protector » configuré pour générer un élément dynamique DPUK similaire à celui généré par le serveur d'authentification en réponse à une requête de l'application mobile 16. Le dispositif 6 bis (téléphone) comporte également la clé Kshared partagée avec le serveur d'authentification 5.

La clé unique secrète Kshared, peut être échangée de manière sécurisée pendant l'enrôlement de l'utilisateur ; Elle peut être mémorisée de manière sécurisée et protégée dans le mobile par exemple grâce à des méthodes avancées d'encryption et d'offuscation et être accessible via un processus de gestion d'accès sécurisé et mécanisme de gestion de droit d'accès. Les processus de protection correspondants sont certifiés. La clé peut être protégée et mémorisée notamment selon une méthode de chiffrement du type WBC « White-Box Cryptography » en anglais), chiffrement homomorphique.

La clé peut avoir été mémorisée dans le dispositif dans le but de permettre une authentification de l'utilisateur dans le cadre d'une procédure d'authentification à l'aide d'un serveur d'authentification 5.

Une telle procédure peut comprendre les étapes de génération d'un OTP dans le dispositif 6 bis sur la base d'un aléa reçu du serveur 5 et de la clé 6 Kshared mémorisée ; puis une étape de transmission au serveur 5 de l'OTP calculé par le dispositif 6 bis à des fins d'authentification après vérification par le serveur de cet OTP calculé. Inversement, un OTP peut être généré dans le dispositif puis envoyé au serveur d'authentification avec un identifiant lié à la clé secrète partagée. Cet OTP est comparé à un OTP calculé dans le serveur sur la base de la même clé partagée retrouvée avec l'identifiant dans le serveur d'authentification. Un aléa peut être une information de compteur évoluant de manière identique dans le dispositif 6 bis et dans le serveur d'authentification sans qu'il y ait eu de transmission de l'un vers l'autre de cet aléa.

Alternativement, l'aléa dans les exemples de l'invention n'a pas besoin d'être transmis dans les échanges. L'identifiant ID1 permet de retrouver un challenge ou un aléa interne identique dans le serveur 5 et dans le téléphone 6 bis par exemple en partageant un même algorithme ou méthode de calcul ou de détermination pour générer un aléa ou variable.
- A l'étape 140, l'application mobile 16 effectue une requête de DPUK au kit de développement logiciel 7 ;
- A l'étape 150, le Kit 7 génère une clé dynamique DPUK de manière similaire à celle générée à l'étape 50 ci-dessus dans le serveur 5 avec l'aléa extrait ou identique à celui du serveur ayant servi à calculer DPUK;
- A l'étape 160, le DPUK est transmis à l'application 16 du dispositif 6 bis;
- A l'étape 170, l'application mobile 16 calcule la clé de chiffrement dynamique (Kenc) de manière identique à l'étape 70 ci-dessus ;
- A l'étape 180, l'application mobile 16 peut enfin déchiffrer les données de transactions chiffrées (TrsDataEnc) à l'aide de la clé de chiffrement / déchiffrement (Kenc) pour obtenir les données de la transaction en clair TrsData.

L'utilisateur peut visualiser les données de sa transaction TrsData et les contrôler. Si elles correspondent à celles qu'il avait envoyées précédemment, alors il peut poursuivre la transaction et la finaliser.

Alternativement, l'invention et notamment, les clés dynamiques d'un serveur d'authentification peuvent être détournées pour effectuer une connexion par tout moyen de communication à une entité de communication (serveur 3, 4, site internet d'un fournisseur de service quelconque, site intranet d'une entreprise, etc.).

Ainsi par exemple, un utilisateur ouvre une page de connexion d'une entité de communication ou portail d'accès quelconque. Il saisit son identifiant ID1 et mot de passe utilisateur sur une application de son terminal mobile, l'application demande une clé dynamique DPUK au kit SDK du terminal 6 bis sur la base d'un aléa interne qu'elle joint à sa demande. Le kit SDK du terminal calcule et retourne à l'application du terminal une clé dynamique DPUK sur la base de l'aléa.

L'application du terminal chiffre des données sensibles de connexion (nom utilisateur, mot de passe...), (les met optionnellement sous forme de code 2D) et les transmet au site (ou entité de communication) à connecter accompagné de préférence de l'aléa (ou sans aléa si le serveur peut calculer un pareil aléa de son côté) et d'un identifiant du terminal et/ou autre identifiant liée à la clé partagée (Kshared). Alternativement, cet identifiant fait partie de l'aléa comme partie fixe et une partie variable complète l'identifiant pour former l'aléa par exemple, radical fixe et aléa variable en suffixe).

A réception des données de connexion chiffrées dynamiquement et de l'aléa (optionnel), l'entité de communication (site internet / intranet ou autre ordinateur à connecter), fait une requête de DPUK sur la base de l'aléa (optionnel et de l'identifiant ID1 via le nuage informatique (C) au serveur d'authentification 5. Le serveur d'authentification 5 dispose d'une base de clés partagées chacune avec un terminal d'utilisateur.

Le serveur 5 retrouve la clé secrète correspondante avec un identifiant ID1 du terminal utilisateur (ou identifiant utilisateur) et l'aléa reçu (ou obtenu en interne de manière synchronisée ou selon une méthode partagée avec le terminal) puis génère à son tour un DPUK ayant la même valeur que celui généré par le mobile. A l'aide de ce DPUK, le site Internet 3, 4 (ou toute entité de communication) déchiffre le message initial pour retrouver les données de connexions qui peuvent être désormais utilisées pour authentifier l'utilisateur et lui accorder la connexion demandée par l'utilisateur.

Dans tous les exemples et toutes les figures, la transmission d'un aléa ou variable (ALEA) est un mode préféré mais peut être facultative. L'important est que le terminal 6 bis ou entité informatique 4 comprenne ou utilise la même variable ou aléa pour obtenir la même clé dynamique DPUK.

Le DPUK peut être un OTP de type HOTP (Mot de passe à usage unique basé sur les événements) ou TOTP (Mot de passe à usage unique basé sur le temps. Dans notre exemple préféré, c'est un HOTP.

Les calculs d'OTP de type HOTP et TOTP sont connus en soi.

La clé dynamique au sens de l'invention est dynamique car sa valeur ou son calcul peut dépendre d'une variable telle qu'une valeur de temps écoulé (horodatage, valeur d'horloge), une valeur d'un compteur (notamment avec incrémentation régulière ou pas notamment selon des évènements), une valeur d'un aléa pouvant changer ou être sélectionnée à chaque transaction selon le hasard. Elle peut dépendre d'une combinaison de plusieurs variables pouvant comprendre ou non un aléa.

La clé dynamique dépend aussi d'une valeur fixe partagée telle une clé (kshared, une valeur secrète, une clé de chiffrement).

Chacun d'eux peut déterminer de son côté par convention partagée ou selon un même algorithme ou une règle partagée, un même aléa (ou même variable). Il peut s'agir par exemple d'une liste d'aléas préétablis préenregistrés (10 à 1000) dans le serveur d'authentification et dans chaque terminal (ou entité informatique 4) et sélectionnés selon un ordre convenu à l'avance. Une synchronisation occasionnelle entre le serveur et les entités ou terminaux peut être nécessaire en cas de problème ou erreur.

Ainsi, l'aléa ou variable n'a pas besoin d'être générée ou transmise aux étapes 30, 40 90, 130.

L'aléa peut être fourni par l'application logicielle ou déterminé par l'application SDK pour la génération à l'étape 150 (fig. 2).

De même, la clé « Kshared » est partagée de préférence mais pas nécessairement dans tous les cas d'utilisation comme ci-après.

Au-delà de la description d'une application de l'invention au chiffrement de données de transaction, les inventeurs ont pensé au potentiel d'un serveur d'authentification en tant que tel. Ils ont pensé que le serveur d'authentification (5) pouvait être utilisé (indépendamment de tout système client-serveur notamment bancaire) comme un serveur de service à la demande pour tout système ou terminal désireux d'obtenir un DPUK à des fins notamment de chiffrement ou déchiffrement. Ce serveur peut être hébergé par exemple dans une organisation ou entité, institution de confiance ou liée à un gouvernement de pays.

Le serveur comprendrait des clés sécrètes associées chacune à un identifiant de personne, entité informatique ou terminal.

Selon une caractéristique, ce serveur d'authentification serait configuré pour générer et communiquer, sur demande 50) et à distance, une clé dynamique (6, DPUK) à partir d'une clé secrète et d'une variable ou aléa : la clé dynamique servant de clé dynamique de chiffrement/déchiffrement ou de base pour obtenir une clé dynamique de chiffrement/déchiffrement de données (avec ou sans une clé de changement de format par exemple).

Selon une caractéristique, la variable (ou ledit aléa) peut être connue du terminal ou de l'entité informatique. Ainsi, on peut retrouver le même DPUK et retrouver en clair des informations ou données transmises dans chaque terminal ou entité informatique.

Dans un mode de fonctionnement encore plus simple, des terminaux ou entités n'ont pas nécessairement le pendant (fonctions similaires) du serveur pour calculer un DPUK à l'aide d'une application SDK).

L'invention (serveur d'authentification détourné) fonctionnerait ainsi : un terminal 6 bis voulant chiffrer des données à transférer à un terminal 6 ter (non illustré mais qui peut être identique ou similaire au terminal 6bis), fait une requête de DPUK au serveur d'authentification sur la base d'un identifiant ID1 de l'utilisateur du terminal ou un identifiant ID1 du terminal. Le serveur 5 retrouve dans sa base de données de HSM une clé secrète (non partagée) mais associée avec l'identifiant ID1 ; puis génère un DPUK (valeur dynamique variable) avec un ALEA ou génère un OTP ;
Ce DPUK ou OTP est transmis au terminal 6bis pour chiffrer ou servir de base au calcul d'une clé de chiffrement des informations ou données. Ces données ou informations sont chiffrées avec la clé de chiffrement et transmises au terminal 6 ter avec un identifiant ID1 du terminal ou de l'utilisateur.

Le terminal ou entité 6ter, reçoit les informations chiffrées et à réception requiert un OTP ou un DPUK identique à celui obtenu par le terminal 6bis auprès du serveur d'authentification 5 sur la base de l'identifiant ID1.

Le serveur 5 transmet ce DPUK ou OTP au terminal 6 ter ce qui permet à ce dernier de calculer une clé de chiffrement /déchiffrement sur la base de cet OTP ou DPUK qui va servir à déchiffrer l'information reçue du terminal 6 bis.

Le cas échéant un aléa peut être transmis au serveur par le terminal 6 bis pour l'intégrer dans le calcul de DPUK ou OTP au niveau serveur 4.

Le cas échéant, cet aléa peut être intégré par le terminal 6 bis dans le calcul de la clé de chiffrement ; il peut être communiqué au terminal 6 ter en même temps que l'identifiant ID1 pour permettre de recalculer la même clé de chiffrement / déchiffrement utilisée par le terminal 6 bis.

Ainsi, on voit le potentiel du serveur d'authentification utilisé au sens de l'invention, en tant de fournisseur d'un service de clés ou d'OTP(s), à la demande. Cette demande peut provenir de toute entité ou terminal de traitement informatique ou de communication, à des fins de chiffrement ou déchiffrement de données ou d'information quelconque.

Ainsi, le serveur 5 de l'invention peut uniquement servir à authentifier un terminal à l'aide d'un OTP et peut servir en outre à fournir des OTP ou DPUK pour servir à chiffrer ou déchiffrer des données.

Alternativement, le serveur 5 peut ne pas être un serveur d'authentification déjà déployé sur le terrain auquel, on redonne une seconde utilisation totalement distincte de celle d'une authentification via OTP. Il peut au contraire être un serveur de clé dynamique déployé au moins à des fins de chiffrement ou déchiffrement de données ou informations (sans être nécessairement un serveur d'authentification).

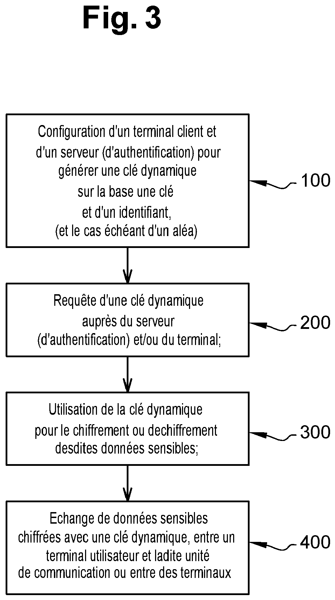

A la figure 3, l'invention prévoit un autre mode de mise en oeuvre plus générique du système des figures 1 et 2 en utilisant au moins en partie du système éventuellement sans SDK, sans Aléa, sans QR code, sans Kpre.
- A l'étape 100, le procédé générique prévoit une configuration d'un serveur 5 (dédié ou pas à l'authentification) et/ou d'un terminal client 6 bis (avec SDK par exemple) pour générer une clé DPUK ou un OTP sur la base d'identifiant ID1 d'utilisateur ou de terminal ou d'une entité informatique 3 ou 4. Le cas échéant, la clé peut être calculée aussi avec un aléa ou une variable qui peut être occasionnellement synchronisée si nécessaire(ou pas) entre des entités (ou terminaux) et serveur 5 ;
- A l'étape 200, le procédé prévoit une requête de clé dynamique (ou OTP) d'un terminal client ou d'une entité informatique cliente auprès du serveur 5 uniquement ou du serveur 5 et du terminal 6 bis chacun de son côté ;
- A l'étape 300, le procédé peut comprendre une étape d'utilisation de la clé DPUK ou OTP directement comme clé de chiffrement dynamique (notamment si la longueur de l'OTP est suffisante) (ou comme base après transformation avec une autre clé ou autre paramètre pour obtenir la clé de chiffrement dynamique), pour chiffrer ou déchiffrer des informations ou données sensibles ;
- A l'étape 400, le procédé effectue un échange des données sensibles chiffrées l'aide d'une clé dynamique, entre un terminal 6 bis d'utilisateur et une unité de communication 3, 4 (ou inversement) ou entre le terminal 6 bis et un quelconque terminal 6 ter similaire à 6 bis.

Ensuite, le terminal 6ter peut requérir une clé DPUK ou un OTP au serveur 5 sur la base de l'identifiant ID1 du terminal 6 bis, pour déchiffrer les données reçues du terminal 6 bis directement ou après calcul de la clé de chiffrement sur la base de DPUK ou l'OTP.

Ainsi, l'invention peut envisager de couvrir tout système informatique ou de communication ayant accès au serveur de clés pour chiffrement ou déchiffrement selon un aspect général de l'invention et pouvant requérir sur demande des clés DPUK (ou OTP). L'accès au serveur peut être effectué via le cloud (nuage informatique). De préférence, l'invention prévoit de réutiliser des serveurs d'authentification déjà déployés sur le terrain pour une fonction d'authentification de terminaux ou autre dispositifs ou entités informatiques afin de mettre en oeuvre très rapidement la fonction de chiffrement ou déchiffrement à moindre coût et de manière très rapide.

Par exemple, il n'est pas nécessaire d'enrôler et de provisionner de nouveau chaque terminal d'utilisateur avec des clés partagées entre chaque terminal et chaque utilisateur.

On comprend bien, que l'invention a l'avantage de pouvoir être d'application immédiate en cas de réutilisation d'une infrastructure existante comprenant un serveur d'authentification.

### Terminologie :

TrsData = Les données de la transaction en cours d'échange avec application mobile client, par exemple pour un transfert d'argent ;
TrsDataEnc = données de transaction chiffrées ;
Chall = challenge aléatoire (Aléa) ;
Kshared = Clé secrète partagée mémorisée dans une zone mémoire sûre ; Échangée pendant un processus d'enrôlement (la clé décrite dans le contexte) ;
HOTP = HMAC-basé sur un algorithme OTP (numéro à usage unique) ;
TOTP = Algorithme de mot de passe unique basé sur le temps ;
DPUK = PUK Dynamique, calculé comme TOTP(KEY, DATA) or HOTP(KEY, DATA); Pour généraliser on utilise DPUK(KEY,DATA);
Kpre (ou Kpredefined) = Clé prédéfinie, une clé aléatoire fixe offusquée dans l'application mobile et connue par l'arrière-plan (back-end en anglais) de la banque :
   Kenc = Clé de chiffrement dynamique

## Revendications

1. Système (2) comprenant un serveur (5) comprenant des clés sécrètes associées chacune à un identifiant (ID1) d'utilisateur, d'entité informatique ou de terminal, ou d'application de terminal,
**caractérisé en ce que** ledit serveur (5) est configuré pour générer et communiquer, sur demande (40) avec l'identifiant (ID1), et à distance, une clé dynamique (6, DPUK) à partir d'une clé secrète (Kshared), et d'une variable ou d'un aléa, ladite clé dynamique (6, DPUK) servant de clé dynamique de chiffrement/déchiffrement ou de base pour obtenir une clé dynamique de chiffrement/déchiffrement de données.

2. Système selon la revendication précédente, **caractérisé en ce que** ladite variable ou ledit aléa est connu du terminal ou de l'entité informatique.

3. Système selon la revendication précédente, **caractérisé en ce que** ladite clé dynamique comprend un OTP, un HOTP ou un TOTP.

4. Système selon l'une des revendications précédentes, **caractérisé en ce que** ledit serveur (5) est un serveur d'authentification.

5. Système de communication de données (2) entre au moins un terminal (1) et une entité informatique (3,4), ledit système comprenant un serveur d'authentification (5) selon la revendication 4, une entité informatique de service (4,5) et des terminaux (1),
ledit système étant configuré pour :
- authentifier chaque terminal (1) ou utilisateur à l'aide du serveur d'authentification (5) sur la base d'une clé partagée (Kshared) entre chaque terminal et ledit serveur d'authentification,
- requérir auprès du serveur d'authentification (5) ou du terminal (1), une génération (50) de clé dynamique de chiffrement (6, DPUK) à partir de ladite clé partagée de terminal, et un aléa ou une variable,
- et utiliser (80) ladite clé dynamique (6, DPUK) pour chiffrer (80) ou déchiffrer (180) lesdites données échangées entre ledit terminal et ladite entité informatique.

6. Système de communication (2) selon la revendication précédente, **caractérisé en ce que** chaque terminal (1) est configuré avec une mémoire comportant une clé de chiffrement/déchiffrement partagée (Kshared) distincte de celle d'un autre terminal et partagée avec ledit serveur d'authentification (5).

7. Procédé de communication de données entre au moins un terminal (1) et une entité informatique (3, 4), ledit procédé mettant en oeuvre un système comprenant ledit serveur d'authentification (5) selon la revendication 4, une entité informatique de service (3,4) et des terminaux (1), ledit procédé comportant des étapes pour :
- configurer ledit système pour authentifier chaque terminal (1) ou utilisateur à l'aide du serveur d'authentification (5) sur la base d'une clé partagée (Kshared) entre chaque terminal et ledit serveur d'authentification,
- requérir auprès du serveur d'authentification (5) ou du terminal (1), une génération (50) de clé dynamique de chiffrement (6, DPUK) à partir de ladite clé partagée (Kshared) correspondant au terminal, et d'un aléa et/ou d'une variable,
- utiliser ladite clé dynamique (6, DPUK) pour chiffrer ou déchiffrer un échange de données entre ledit terminal (1) et ladite entité informatique (4, 5) .

8. Procédé selon la revendication précédente, **caractérisé en ce que** ledit échange de données est distinct d'un échange de données d'authentification comprenant un numéro à usage unique (OTP) échangé entre ledit terminal et ledit serveur d'authentification ou ladite entité de communication.

9. Procédé selon la revendication précédente, **caractérisé en ce que** ladite clé de chiffrement dynamique (6, DPUK) est générée par ledit serveur d'authentification (5), en réponse à une commande spécifique (40) standard ou certifiée émise par ladite entité informatique de communication (3,4).

10. Procédé selon l'une des revendications 7 à 9, **caractérisé en ce que** ladite clé de chiffrement dynamique comprend un OTP ou HOTP ou TOTP.

## Patentansprüche

1. System (2), umfassend einen Server (5), umfassend Geheimschlüssel, die jeweils einer Kennung (ID1) eines Benutzers, einer Computereinheit oder eines Endgeräts oder einer Endgerätanwendung zugeordnet sind,
**dadurch gekennzeichnet, dass** der Server (5) zum Erzeugen und Kommunizieren, auf Anfrage (40) mit der Kennung (ID1), und aus der Ferne, eines dynamischen Schlüssels (6, DPUK) ausgehend von einem Geheimschlüssel (Kshared) und einer Variablen oder einer Zufälligkeit konfiguriert ist, wobei der dynamische Schlüssel (6, DPUK) als dynamischer Verschlüsselungs-/Entschlüsselungsschlüssel oder als Basis zum Erhalten eines dynamischen Datenverschlüsselungs-/-entschlüsselungsschlüssels dient.

2. System nach dem vorstehenden Anspruch, **dadurch gekennzeichnet, dass** die Variable oder die Zufälligkeit dem Endgerät oder der Computereinheit bekannt ist.

3. System nach dem vorstehenden Anspruch, **dadurch gekennzeichnet, dass** der dynamische Schlüssel ein OTP, HOTP oder ein TOTP umfasst.

4. System nach einem der vorstehenden Ansprüche, **dadurch gekennzeichnet, dass** der Server (5) ein Authentifizierungsserver ist.

5. Datenkommunikationssystem (2) zwischen mindestens einem Endgerät (1) und einer Computereinheit (3, 4), das System umfassend einen Authentifizierungsserver (5) nach Anspruch 4, eine Dienstcomputereinheit (4, 5) und Endgeräte (1), wobei das System konfiguriert ist zum:
- Authentifizieren jedes Endgeräts (1) oder Benutzers mittels des Authentifizierungsservers (5) auf der Basis eines gemeinsam genutzten Schlüssels (Kshared) zwischen jedem Endgerät und dem Authentifizierungsserver,
- Anfordern bei dem Authentifizierungsserver (5) oder dem Endgerät (1) einer Erzeugung (50) des dynamischen Verschlüsselungsschlüssels (6, DPUK) ausgehend von dem gemeinsam genutzten Schlüssel des Endgeräts und einer Zufälligkeit oder einer Variablen,
- und Benutzen (80) des dynamischen Schlüssels (6, DPUK) zum Verschlüsseln (80) oder Entschlüsseln (180) der Daten, die zwischen dem Endgerät und der Computereinheit ausgetauscht werden.

6. Kommunikationssystem (2) nach dem vorstehenden Anspruch, **dadurch gekennzeichnet, dass** jedes Endgerät (1) mit einem Speicher konfiguriert ist, der einen gemeinsam genutzten Verschlüsselungs-/Entschlüsselungsschlüssel (Kshared) aufweist, der verschieden von dem eines anderen Endgeräts ist und mit dem Authentifizierungsserver (5) gemeinsam genutzt ist.

7. Datenkommunikationsverfahren zwischen mindestens einem Endgerät (1) und einer Computereinheit (3, 4), wobei das Verfahren ein System implementiert, umfassend den Authentifizierungsserver (5) nach Anspruch 4, eine Dienstcomputereinheit (3, 4) und Endgeräte (1), wobei das Verfahren Schritte aufweist zum:
- Konfigurieren des Systems zum Authentifizieren jedes Endgeräts (1) oder Benutzers mittels des Authentifizierungsservers (5) auf der Basis eines gemeinsam genutzten Schlüssels (Kshared) zwischen jedem Endgerät und dem Authentifizierungsserver,
- Anfordern bei dem Authentifizierungsserver (5) oder dem Endgerät (1) einer Erzeugung (50) des dynamischen Verschlüsselungsschlüssels (6, DPUK) ausgehend von dem gemeinsam genutzten Schlüssel (Kshared), der dem Endgerät entspricht, und einer Zufälligkeit und/oder einer Variablen,
- und Benutzen des dynamischen Schlüssels (6, DPUK) zum Verschlüsseln oder Entschlüsseln eines Datenaustauschs zwischen dem Endgerät (1) und der Computereinheit (4, 5).

8. Verfahren nach dem vorstehenden Anspruch, **dadurch gekennzeichnet, dass** der Datenaustausch von einem Authentifizierungsdatenaustausch verschieden ist, umfassend eine einmalige Verwendungsnummer (OTP), die zwischen dem Endgerät und dem Authentifizierungsserver oder der Kommunikationseinheit ausgetauscht wird.

9. Verfahren nach dem vorstehenden Anspruch, **dadurch gekennzeichnet, dass** der dynamische Verschlüsselungsschlüssel (6, DPUK) durch den Authentifizierungsserver (5) als Reaktion auf einen spezifischen Standard- oder zertifizierten Befehl (40) erzeugt wird, der durch die Kommunikationscomputereinheit (3, 4) emittiert wird.

10. Verfahren nach einem der Ansprüche 7 bis 9, **dadurch gekennzeichnet, dass** der dynamische Verschlüsselungsschlüssel ein OTP oder HOTP oder TOTP umfasst.

## Claims

1. A system (2) comprising a server (5) comprising secret keys each associated with an identifier (ID1) of a user, computing entity or terminal, or terminal application,
**characterized in that** said server (5) is configured to generate and communicate, on request (40) with the identifier (ID1), and remotely, a dynamic key (6, DPUK) based on a secret key (Kshared), and on a variable or a random value, said dynamic key (6, DPUK) serving as a dynamic encryption/decryption key or as a base for obtaining a dynamic data encryption/decryption key.

2. The system according to the preceding claim, **characterized in that** said variable or said random number is known to the terminal or the computing entity.

3. The system according to the preceding claim, **characterized in that** said dynamic key comprises an OTP, an HOTP or a TOTP.

4. The system according to one of the preceding claims, **characterized in that** said server (5) is an authentication server.

5. A data communication system (2) between at least one terminal (1) and a computing entity (3,4), said system comprising an authentication server (5) according to claim 4, a service computing entity (4,5) and terminals (1), said system being configured to:
- authenticating each terminal (1) or user using the authentication server (5) on the basis of a shared key (Kshared) between each terminal and said authentication server,
- requesting from the authentication server (5) or from the terminal (1), a generating (50) of a dynamic encryption key (6, DPUK) based on said shared terminal key, and on a random figure or variable,
- and using (80) said dynamic key (6, DPUK) to encrypt (80) or decrypt (180) said data exchanged between said terminal and said computing entity.

6. The communication system (2) according to the preceding claim, **characterized in that** each terminal (1) is configured with a memory comprising a shared encryption/decryption key (Kshared) distinct from that of another terminal and shared with said authentication server (5).

7. A method for data communication between at least one terminal (1) and a computing entity (3, 4), said method implementing a system comprising said authentication server (5) according to claim 4, a service computing entity (3,4), and terminals (1), said method comprising steps for:
- configuring said system for authenticating each terminal (1) or user using the authentication server (5) on the basis of a shared key (Kshared) between each terminal and said authentication server,
- requesting from the authentication server (5) or from the terminal (1), a generating (50) of a dynamic encryption key (6, DPUK) based on said shared key (Kshared) corresponding to the terminal, and on a random figure and/or variable,
- using said dynamic key (6, DPUK) to encrypt or decrypt an exchange of data between said terminal (1) and said computing entity (4, 5).

8. The method according to the preceding claim, **characterized in that** said exchange of data is distinct from an exchange of authentication data comprising a one-time number (OTP) exchanged between said terminal and said authentication server or said communication entity.

9. The method according to the preceding claim, **characterized in that** said dynamic encryption key (6, DPUK) is generated by said authentication server (5), in response to a standard or certified specific command (40) emitted by said communication computing entity (3,4).

10. The method according to any one of claims 7 to 9, **characterized in that** said dynamic encryption key comprises an OTP or HOTP or TOTP.
